# EUROPEAN PATENT SPECIFICATION

(11) **EP 2 994 682 B1**
(45) Date of publication and mention of the grant of the patent: **17.10.2018**
(21) Application number: 14734266.1
(22) Date of filing: 23.04.2014
(51) Int. Cl.: F16L 21/06, F16L 17/04, F16L 25/14

(54) **COUPLING FOR RANGE OF PIPE DIAMETERS**
KUPPLUNG FÜR VERSCHIEDENE ROHRDURCHMESSER
ACCOUPLEMENT POUR UNE GAMME DE DIAMÈTRES DE TUYAUX

(30) Priority: 25.04.2013 US 201313870200
(43) Date of publication of application: 16.03.2016
(73) Proprietor: Eliezer Krausz Industrial Development Ltd., 66559 Tel Aviv (IL)
(72) Inventor: CHIPROOT, Avi, 44278 Kfar-Saba (IL)
(74) Representative: Becker Kurig Straus
(86) International application number: PCT/US2014/035062
(87) International publication number: WO 2014/176299

(56) References cited:
- EP-A1- 0 551 582
- EP-A1- 0 962 688
- EP-A2- 1 637 788
- EP-A2- 1 862 722
- WO-A1-96/07046
- WO-A1-96/41983
- WO-A1-2005/038328

## Description

### FIELD OF THE INVENTION

The present invention relates generally to couplings (or clamps) and grip rings for pipes, and particularly to a seal assembly for a coupling wherein tightening the seal assembly causes the seal to expand in a manner suitable for sealing different diameter pipes.

### BACKGROUND OF THE INVENTION

Many kinds of removable band-type couplings for pipes exist in the art, see for example documents WO2005038328A1, WO9461983A1 or WO9607046A1. It is noted that throughout the specification and claims, the term "pipe" encompasses any kind of generally cylindrical object.

Such couplings have an elastomeric seal assembly which is tightened to form a watertight seal against the pipe. Couplings are known that can be used for a range of pipe diameters. Generally, such seal assemblies have two layers of gaskets (seals), for example, constructed of a first ring seal seated over a second ring seal. The seals can be easily disconnected from one another to allow sealing against different diameter pipes. For smaller diameter pipes, both the first and second ring seals are used; for larger diameters, only one seal is used.

### SUMMARY OF THE INVENTION

The present invention seeks to provide an improved seal assembly according with claim 1, as is described more in detail hereinbelow. Unlike the prior art, the seal assembly of the present invention is constrained to be tightened in a tightening chamber such that the seal can be sealingly tightened against a relatively large diameter pipe, and increased tightening of the seal assembly causes the seal to expand radially inwards towards an outer circumference of the pipe so that the seal can be sealingly tightened against a relatively small diameter pipe, thereby compensating the difference in diameters of the pipes with a single sealing ring.

There is thus provided in accordance with an embodiment of the present invention a pipe coupling including an annular clamp housing that has ends which are provided with two opposing clamp members and that includes one or more tightening elements for tightening the clamp members towards each other in a direction transverse to an axial length of the annular clamp housing so as to apply a radially-inward clamping force on a pipe being clamped in the annular clamp housing, and an annular seal mounted in a tightening chamber with borders defined by inner walls of the annular clamp housing and an inner abutment, the tightening chamber having a single annular opening that faces radially inwards, wherein upon sufficient tightening of the one or more tightening elements, the annular seal cannot expand against the borders of the tightening chamber and can only expand radially inwards through the single annular opening.

In accordance with an embodiment of the present invention the annular seal is made of a material whose volume remains substantially unchanged during tightening of the annular seal.

In accordance with an embodiment of the present invention the annular seal is constructed with an outer portion folded over an inner portion so as to define at least one inner annular space between and bounded by the inner and outer portions.

In accordance with an example useful for understanding the invention the inner abutment is substantially perpendicular to a circumference of a pipe inserted in the clamp.

In accordance with the present invention the inner abutment is not perpendicular to a circumference of a pipe inserted in the clamp.

In accordance with the present invention the inner abutment is slanted so that a radially inward area of the tightening chamber is smaller than a radially outward area of the tightening chamber.

### BRIEF DESCRIPTION OF THE DRAWINGS

The present invention will be understood and appreciated more fully from the following detailed description, taken in conjunction with the drawing in which:
Fig. 1 is a simplified pictorial illustration of a pipe coupling with a seal assembly, constructed and operative in accordance with a non-limiting embodiment of the present invention;
Fig. 2 is a simplified sectional illustration of a seal assembly including a straight-wall tightening chamber for the seal, and in which the seal has an inner annular space for hydraulically increasing tightening of the seal;
Fig. 3 is a simplified sectional illustration of a seal assembly including a straight-wall tightening chamber for the seal, with no hydraulic inner annular space;
Fig. 4 is a simplified sectional illustration of a seal assembly including a tapered-wall tightening chamber for the seal, and in which the seal has an inner annular space for hydraulically increasing tightening of the seal, in accordance with the present invention; and
Fig. 5 is a simplified sectional illustration of a seal assembly including a tapered-wall tightening chamber for the seal, with no hydraulic inner annular space, in accordance with an embodiment of the present invention.

### DETAILED DESCRIPTION OF EMBODIMENTS

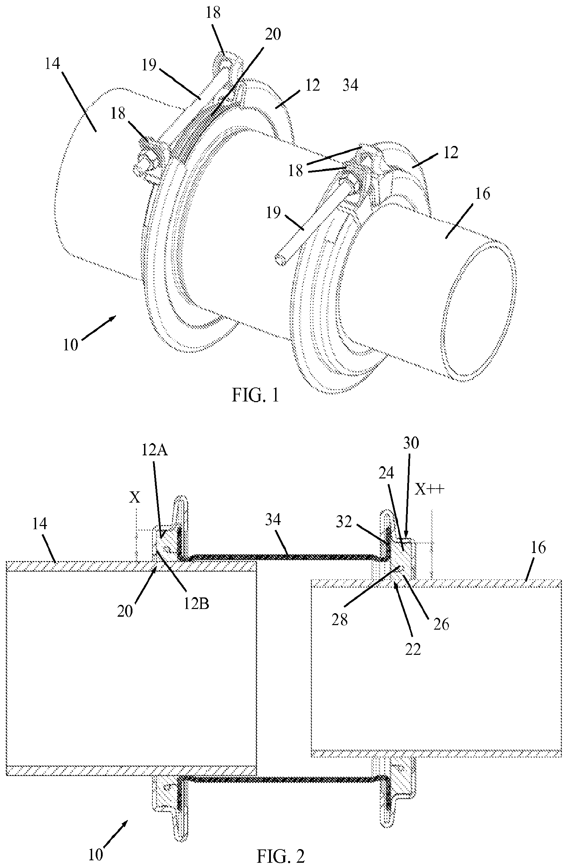

Reference is now made to Fig. 1, which illustrates a pipe coupling 10 with a seal assembly 20, constructed and operative in accordance with a non-limiting embodiment of the present invention.

Pipe coupling 10 includes an annular clamp housing 12, typically made of a flexible metal sheet, such as but not limited to, stainless steel. Annular clamp housing 12 is adapted for sealing against pipes of different diameters, such as a relatively large diameter pipe 14 and a relatively small diameter pipe 16. The ends of annular clamp housing 12 are provided with two opposing clamp members 18. One or more tightening elements 19 (e.g., one or more mechanical fasteners, such as a bolt or screw and a tightening nut, and possibly washer) fasten and tighten clamp members 18 towards each other in a direction transverse to the axial length of annular clamp housing 12 so as to apply a radially-inward clamping force on the pipe being clamped.

The annular seal assembly 20 can be provided in different configurations as is now described. An example useful for understanding the invention is described with reference to Fig. 2.

In this embodiment, annular seal assembly 20 includes an annular seal 22. All the seals of the present invention, without limitation, may be made of a rubber (e.g., EPDM (ethylene propylene diene monomer), butyl, styrene butadiene or neoprene) or a thermoplastic elastomer (e.g., polyurethane or olefin) compatible with the fluid to be carried in the pipe. For example, without limitation, the seal may be made of EPDM rubber with 70-80 Shore A durometer.

Annular seal 22 is constructed with an outer portion 24 folded over an inner portion 26 so as to define at least one inner annular space 28 between and bounded by the inner and outer portions 26 and 24. Annular seal 22 is mounted in a tightening chamber 30 defined by inner walls of annular clamp housing 12 (which include an outer ring wall 12A and a transverse inner wall 12B) and an inner abutment 32. In the illustrated embodiment, the inner abutment 32 is the face of a cylindrical member 34 that connects or bridges between the left side clamp 10 and the right side clamp 10. However, the invention can also be carried out with just one clamp without cylindrical member 34, in which case the inner abutment 32 may be the face of an end member or flange and the like. The inner wall 12B may be planar as shown, or alternatively, may be curved or bulged.

The left side clamp is tightened against large diameter pipe 14, whereas the right side clamp is tightened against small diameter pipe 16. The difference in the amount the tightening element 19 of the clamp has been tightened for the right side clamp as opposed to the left side clamp is easily seen in Fig. 1. The additional tightening of the right side clamp applies increased force on the annular seal 22 of annular seal assembly 20. As is well known in engineering, the force required to achieve the proper seal depends mostly on three factors: the cross section of the seal, the durometer of the seal material, and the percent squeeze required. Since the seal is rubber or other suitable elastomer for this application, the volume of the elastomeric material does not change. The annular seal 22 cannot expand against the borders of the tightening chamber 30, and tightening chamber 30 has a single annular opening that faces radially inwards. Therefore, annular seal 22 has only one direction to expand and maintain a constant volume, namely, radially inwards towards the longitudinal centerline of pipe 16. Thus, the additional tightening of the right side clamp causes annular seal 22 to extrude outwards of tightening chamber 30 towards the outer circumference of pipe 16 and seal thereagainst. The difference in radial height of seal 22 between the left side clamp and the right side clamp is shown in the figure as x (left side) and x++ (right side). This is the range of pipe diameters for sealing by annular seal 22.

The inner annular space 28 is in fluid communication with a fluid (e.g., water, not shown) flowing in pipes 14 and 16. The fluid enters inner annular space 28 via one or more apertures (not shown) formed in a side wall of the seal 22. The fluid applies pressure in inner annular space 28 to increase tightening of the seal.

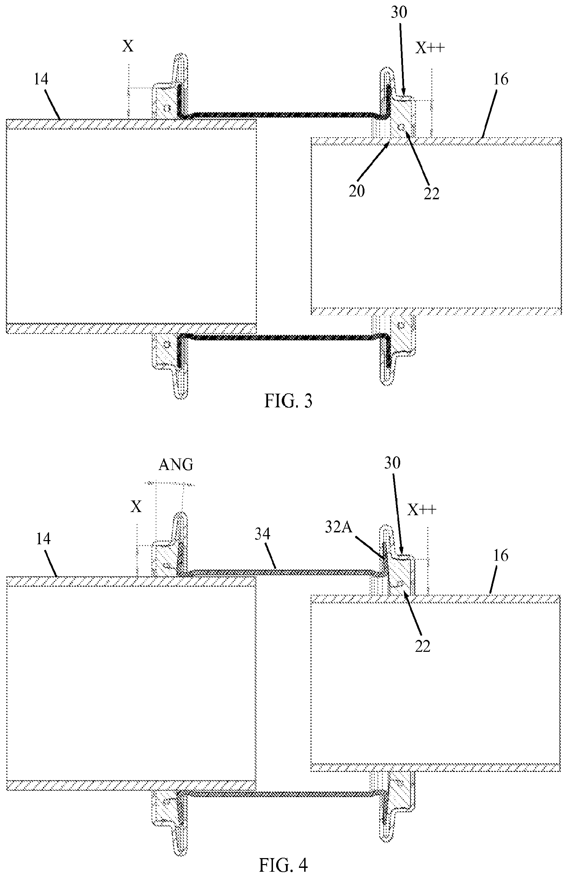

Reference is now made to Fig. 3. This example is basically the same as the embodiment of Fig. 2, except there is no hydraulic inner annular space.

Reference is now made to Fig. 4. This embodiment is basically the same as the example of Fig. 2, except there is an inner abutment 32A which is tapered, that is, not perpendicular to the circumference of the pipe. In particular, inner abutment 32A is slanted (at an angle "Ang" from the vertical) so that the radially inward area of tightening chamber 30 is smaller than the radially outward area of tightening chamber 30. This means the area from which seal 22 extrudes out of the tightening chamber 30 towards the outer circumference of pipe 16 is smaller than that of the example of Fig. 2. Thus, the embodiment of Fig. 4 further constrains the possible opening for the seal to expand and further increases the range of pipe diameters for sealing.

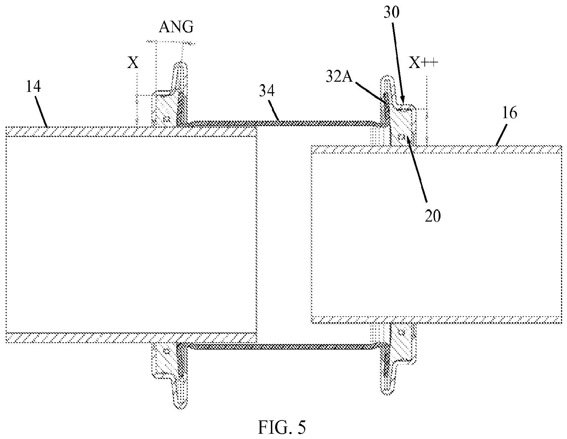

Reference is now made to Fig. 5. This embodiment is basically the same as the embodiment of Fig. 4, except there is no hydraulic inner annular space.

## Claims

1. A pipe coupling (10) comprising:
a left side clamp which in use is tightened against a large diameter pipe (14),
a right side clamp which in use is tightened against a small diameter pipe (16), and
a cylindrical member (34) that connects or bridges between the left side clamp and the right side clamp, the said cylindrical member (34) comprises at its ends an inner abutment (32),
wherein each of the said left and right side clamps comprises
an annular clamp housing (12) that has ends which are provided with two opposing clamp members (18) and that comprises one or more tightening elements (19) for tightening said clamp members (18) towards each other in a direction transverse to an axial length of said annular clamp housing (12) so as to apply a radially-inward clamping force on a pipe being clamped in said annular clamp housing (12); and wherein
an annular seal (22) mounted in a tightening chamber (30) with borders defined by inner walls of said annular clamp housing (12) and defined by said inner abutment (32), said tightening chamber (30) having a single annular opening that faces radially inwards, wherein the pipe coupling is arranged such that
upon sufficient tightening of said one or more tightening elements (19), said annular seal (22) does not expand against the borders of said tightening chamber (30) and only expands radially inwards through the single annular opening, and said annular seal (22) extrudes outwards of said tightening chamber (30), and
wherein the said inner abutment (32) is arranged not perpendicular to a circumference of a pipe inserted in said clamp housing (12), the said inserted pipe extending along of said axial length of said annular clamp housing (12) and said inner abutment (32A) is arranged slanted so that a radially inward area of said tightening chamber (30) is smaller than a radially outward area of said tightening chamber (30), and so that
the said tightening chamber (30) has a radially inward length in the direction of said axial length of said annular clamp housing (12), and
the said tightening chamber (30) has a radially outward length in the direction of said axial length of said annular clamp housing (12),
**characterised in that**
the said radially inward length of said tightening chamber (30) is smaller than
the said radially outward length of said tightening chamber (30).

2. The pipe coupling (10) according to claim 1, wherein said annular seal (22) is made of a material whose volume remains substantially unchanged during tightening of said annular seal (22).

3. The pipe coupling (10) according to claim 1, wherein said annular seal (22) is constructed with an outer portion (24) folded over an inner portion (26) so as to define at least one inner annular space (28) between and bounded by said inner and outer portions (24,26).

## Patentansprüche

1. Rohrkupplung (10), umfassend:
eine linksseitige Klemme, die im Gebrauch an einem Rohr mit großem Durchmesser (14) festgezogen wird,
eine rechtsseitige Klemme, die im Gebrauch an einem Rohr mit geringem Durchmesser (16) festgezogen wird, und
ein zylindrisches Element (34), das eine Verbindung oder Überbrückung zwischen der linksseitigen Klemme und der rechtsseitigen Klemme schafft, wobei das zylindrische Element (34) an seinen Enden eine innere Anlagefläche (32) umfasst,
wobei von der linksseitigen und rechtsseitigen Klemme jede Folgendes umfasst:
ein ringförmiges Klemmengehäuse (12), das Enden aufweist, die mit zwei gegenüberliegenden Spannelementen (18) versehen sind, und das ein oder mehrere Festziehelemente (19) umfasst, damit die Spannelemente (18) aufeinander zu in einer Richtung quer zu einer Achslänge des ringförmigen Klemmengehäuses (12) festgezogen werden und so eine radial nach innen gerichtete Spannkraft auf ein Rohr ausgeübt wird, das in dem ringförmigen Klemmengehäuse (12) eingespannt ist; und
wobei
eine Ringdichtung (22), die in einer Festspannkammer (30) mit Begrenzungen eingesetzt ist, die durch Innenwände des ringförmigen Klemmengehäuses (12) definiert sind und durch die innere Anlagefläche (32) definiert sind, wobei die Festspannkammer (30) eine einzelne ringförmige Öffnung aufweist, die radial nach innen weist, wobei die Rohrkupplung derart angeordnet ist, dass sich beim ausreichenden Festziehen des einen oder der mehreren Festziehelemente (19) die Ringdichtung (22) nicht gegen die Begrenzungen der Festspannkammer (30) ausdehnt und sich nur radial nach innen durch die einzelne ringförmige Öffnung ausdehnt, und die Ringdichtung (22) aus der Festspannkammer (30) nach außen gepresst ist, und
wobei die innere Anlagefläche (32) nicht senkrecht zu einem Umfang eines Rohrs angeordnet ist, das in das Klemmengehäuse (12) gesteckt ist, wobei das eingesteckte Rohr entlang der Achslänge des ringförmigen Klemmengehäuses (12) verläuft und die innere Anlagefläche (32A) schräg angeordnet ist, sodass ein sich radial innen befindlicher Bereich der Festspannkammer (30) kleiner ist als ein sich radial außen befindlicher Bereich der Festspannkammer (30), und sodass
die Festspannkammer (30) ein radial nach innen gerichtetes Stück in Richtung der Achslänge des ringförmigen Klemmengehäuses (12) aufweist, und
die Festspannkammer (30) ein radial nach außen gerichtetes Stück in Richtung der Achslänge des ringförmigen Klemmengehäuses (12) aufweist,
**dadurch gekennzeichnet, dass**
das radial nach innen gerichtete Stück der Festspannkammer (30) kürzer ist als das radial nach außen gerichtete Stück der Festspannkammer (30).

2. Rohrkupplung (10) nach Anspruch 1, wobei die Ringdichtung (22) aus einem Material gefertigt ist, dessen Volumen während des Festspannens der Ringdichtung (22) im Wesentlichen unverändert bleibt.

3. Rohrkupplung (10) nach Anspruch 1, wobei die Ringdichtung (22) mit einem Außenabschnitt (24) ausgestaltet ist, der über einen Innenabschnitt (26) gelegt ist und so mindestens einen zwischen dem Innen- und Außenabschnitt (24, 26) befindlichen und von ihnen begrenzten ringförmigen Innenraum (28) definiert.

## Revendications

1. Accouplement de tuyaux (10) comprenant :
un collier côté gauche qui, en service, est serré contre un tuyau de grand diamètre (14),
un collier côté droit qui, en service, est serré contre un tuyau de petit diamètre (16), et
un élément cylindrique (34) qui connecte ou réalise un pont entre le collier côté gauche et le collier côté droit, ledit élément cylindrique (34) comprenant à ses extrémités une butée interne (32),
dans lequel chacun desdits colliers côté gauche et côté droit comprend
un boîtier de collier annulaire (12) dont les extrémités sont pourvues de deux éléments de collier opposés (18) et qui comprend un ou plusieurs éléments de serrage (19) pour serrer lesdits éléments de collier (18) l'un vers l'autre selon une direction transversale à la longueur axiale dudit boîtier de collier annulaire (12) de manière à appliquer une force de serrage radialement vers l'intérieur sur un tuyau serré dans ledit boîtier de collier annulaire (12) : et
dans lequel un joint annulaire (22) monté dans une chambre de serrage (30) dont les bords sont définis par des parois internes dudit boîtier de collier annulaire (12) et par ladite butée interne (32), ladite chambre de serrage (30) comportant une ouverture annulaire unique tournée radialement vers l'intérieur, dans lequel l'accouplement de tuyaux est agencé de telle sorte que, lors d'un serrage suffisant desdits un ou plusieurs éléments de serrage (19), ledit joint annulaire (22) ne s'étend pas contre les bords de ladite chambre de serrage (30) et s'étend uniquement radialement vers l'intérieur à travers l'ouverture annulaire unique, et ledit joint annulaire (22) est extrudé vers l'extérieur de ladite chambre de serrage (30), et
dans lequel ladite butée interne (32) est agencée de manière non perpendiculaire à la circonférence d'un tuyau inséré dans ledit boîtier de serrage (12), ledit tuyau inséré s'étendant selon ladite longueur axiale dudit boîtier de collier annulaire (12) et ladite butée interne (32A) est agencée de manière oblique de telle sorte qu'une zone située radialement vers l'intérieur de ladite chambre de serrage (30) est plus petite qu'une zone située radialement vers l'extérieur de ladite chambre de serrage (30), et de telle sorte que
ladite chambre de serrage (30) présente une longueur radialement vers l'intérieur selon la direction de ladite longueur axiale dudit boîtier de collier annulaire (12), et
ladite chambre de serrage (30) présente une longueur radialement vers l'extérieur selon la direction de ladite longueur axiale dudit boîtier de collier annulaire (12),
**caractérisé en ce que**
ladite longueur radialement vers l'intérieur de ladite chambre de serrage (30) est inférieure à ladite longueur radialement vers l'extérieur de ladite chambre de serrage (30).

2. Accouplement de tuyaux (10) selon la revendication 1, dans lequel ledit joint annulaire (22) est constitué d'un matériau dont le volume reste substantiellement inchangé durant le serrage dudit joint annulaire (22).

3. Accouplement de tuyaux (10) selon la revendication 1, dans lequel ledit joint annulaire (22) est constitué d'une portion externe (24) repliée sur une portion interne (26) de manière à définir au moins un espace annulaire interne (28) situé entre lesdites portions interne et externe (24,26) et limité par celles-ci.
